# EUROPÄISCHE PATENTSCHRIFT

(11) **EP 0 396 030 B1**
(45) Veröffentlichungstag und Bekanntmachung des Hinweises auf die Patenterteilung: **16.08.1995**
(21) Anmeldenummer: 90108018.4
(22) Anmeldetag: 27.04.1990
(51) Int. Cl.: B29C 45/74, B22D 17/24, B21D 11/07

(54) **Temperiereinrichtung an einer Kunststoffe verarbeitenden Maschine**
Heating apparatus for a machine for working plastic materials
Dispositif de chauffage pour une machine travaillant les matières plastiques

(30) Priorität: 05.05.1989 DE 3914742; 26.08.1989 EP 89115780
(43) Veröffentlichungstag der Anmeldung: 07.11.1990
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- DE-A- 2 236 898
- DE-A- 3 428 539
- DE-B- 1 149 161
- US-A- 2 851 082
- US-A- 3 317 958
- US-A- 3 370 262
- US-A- 4 112 728

## Beschreibung

Die Erfindung betrifft eine Temperiereinrichtung an einer Kunststoffe verarbeitenden Maschine entsprechend dem Oberbegriff des Patentanspruches 1.

Unter "Temperiereinrichtung" im Sinne des Oberbegriffes wird eine Einrichtung verstanden, die befähigt ist, dem Plastifizierzylinder eine derartige Menge an Wärme zeitgerecht zuzuführen oder zu entziehen, daß die nach dem Arbeitsprogramm der Maschine erforderlichen Temperaturen laufend realisiert werden.

Unter dem Begriff "rohrartiges Temperierelement" wird ein Energie zuführendes oder ein Energie entziehendes Element gleichermaßen verstanden. Im ersten Falle handelt es sich um ein durch Biegen verformtes Widerstandsheizrohr, in welchem wenigstens ein Widerstandsdraht mittels eines elektrisch isolierenden, jedoch gut wärmeleitenden Pulvers (z.B. Silicat-Pulver) etwa zentrisch eingebettet ist. Im zweiten Falle handelt es sich um ein metallenes Rohr, das für den Durchfluß eines flüssigen Kühlmediums geeignet ist.

Bei üblichen Temperiereinrichtungen dieser Art gemäß der dem Oberbegriff des Anspruches 1 zugrundeliegenden US-A-3 317 958 oder der US-PS 3,751,014; DE-OS 23 47 987; DE-OS 24 17 067 sind in jeder Temperierschale radial gegeneinander versetzte Temperierelemente enthalten, von welchen wenigstens eines ein Heizelement und wenigstens ein anderes ein Kühlelement ist. Die Temperierelemente ermöglichen die Realisierung der jeweils erforderlichen optimalen Betriebstemperatur an dem zu beheizenden Objekt in einem verhältnismäßig weiten Temperaturbereich, indem je nach Bedarf geheizt oder gekühlt wird. Die Dicke der hälftigen Temperierschalen kann sich zum Durchmesser der in ihr eingegossenen schichtweise angeordneten Heizmittel wie 6 bzw. 3,5 zu 1 verhalten. Die bekannten Temperierschalen weisen also eine verhältnismäßig dicke Schalenwandung und somit eine hohe Steifigkeit auf. Dies erschwert eine satte Anlage der Kontaktfläche der Temperierschalen an der Mantelfläche des zu beheizenden Plastifizierzylinders auch wenn zusätzliche, die Steifigkeit vermindernde Maßnahmen ergriffen werden. Diesbezüglich sind in einem Fall (US-PS 3,317,958) Achsialnuten in den Schalen vorgesehen, durch welche die Flexibilität jedoch nur im Bereich dieser Achsialnuten erhöht werden kann, nicht aber im Bereich der sektoralen Abschnitte zwischen den Achsialnuten. Demzufolge wird bei den in Betracht gezogenen Temperiereinrichtungen zwar eine intensive Kontaktierung mit dem Plastifizierzylinder dadurch angestrebt, daß zur Beheizung auf dem Plastifizierzylinder hälftige Temperierschalen vorgesehen sind, welche mittels Spannmittel auf dem Plastifizierzylinder radial aufgepreßt werden können. Eine optimale Wärmeübertragung ist jedoch wegen der durch die Schalendicke begründeten Steifigkeit nicht erzielbar. Andererseits sind einer Minimierung der Wanddicke der Temperaturschalen aufgrund der in radialer Richtung versetzten Anordnung der Heizmittel prinzipielle Grenzen gesetzt.

Eine in radialer Richtung versetzte Anordnung von Kühlmitteln und Heizmitteln weisen auch an sich bekannte (DE-AS 1 149 161) Heizmanschetten für Kunststoffe verarbeitende Maschinen auf, bei welchen die Heizmittel durch schraubenförmig angeordnete, in die Heizmanschette eingegossene und den Plastifizierzylinder vollkommen umschließende, rohrartige Widerstandsheizelemente gebildet sind. Insofern ist bei diesen Heizmanschetten eine Aufteilung in Halbschalen und somit ein radiales Aufpressen ihrer Kontaktflächen auf den Plastifizierzylinder nicht möglich. Zwar ist es denkbar, daß diese geschlossenen Metallmanschetten bei entsprechend geringer lichter Weite unter Anwendung erheblicher Kräfte axial auf den Preßzylinder mittels entsprechender Geräte aufgepreßt werden. Ein rascher Austausch der Temperiermittel zu Reparatur- und Servicezwecken ist dann aber nicht mehr möglich. Bei der Temperiereinrichtung nach der DE-AS 1,149,161 sind übrigens an inneren Mantelflächen der Manschetten axiale Kanäle für Kühlluft vorgesehen, die einerseits vom Mantel des Plastifizierzylinders begrenzt sind und andererseits an die schraubenförmig gewickelten Heizrohre angrenzen. Unter dieser Voraussetzung ist der Einsatz von flüssigen Kühlmedien, insbesondere von Kühlwasser schwerlich möglich. Letztere sind aber für eine exakte Temperaturführung bei modernen, anspruchsvollen Temperiereinrichtungen unentbehrlich. Dies ist insbesondere dann der Fall, wenn eine rasche Temperaturanpassung an wechselnde Temperaturerfordernisse gefordert ist. Darüber hinaus bedingen die inneren Kühlnuten bei der bekannten Temperiereinrichtung eine Reduzierung der zur Wärmeübertragung verfügbaren Kontaktfläche um etwa die Hälfte. Hieraus ist zu folgern, daß es bei dieser Temperiereinrichtung auf eine energiesparende Maximierung der Wärmeübertragung als solche nicht ankommt, wenngleich eine Minimierung der Temperaturschwankungen durch Minimierung der Masse der Temperiermanschetten offensichtlich angestrebt und erreicht wird.

Aus der DE 34 28 539 A1 ist auch eine Heizmanschette zum Beheizen von rohrförmigen Gegenständen, insbesondere von Anspritzdüsen von Kunststoff-Spritzgußmaschinen bekannt. Diese besteht aus einer oder mehreren rechteckigen metallischen Platten mit parallel verlaufenden Rillen, in welche Heizpatronen eingelegt sind. Die Platten sind so zu Halbkreis-Zylinderschalen gebogen, daß die Rillen auf der konkav gekrümmten inneren Oberfläche parallel zur Zylinderachse verlaufen. Bei einer solchen Ausbildung kann die Abmessung der Heizmanschette in radialer Richtung zwar relativ gering bemessen und deren Masse gering gehalten werden. Die Heizpatronen liegen aber zwangsläufig unmittelbar auf dem zu beheizenden rohrförmigen Gegenstand auf. Dadurch ergeben sich einerseits entlang der aufliegenden Heizpatronen überhitzte Zonen in dem zu temperierenden Gegenstand. Andererseits vermindern die die Heizpatronen aufnehmenden Nuten die innere Kontaktfläche der Platten wesentlich, weshalb die Wärme-Übertragung von den Körpern der Platten auf den zu beheizenden Gegenstand eingeschränkt ist. Insofern ist eine für eine strenge Temperaturführung ausreichend gleichmäßige Wärmeübertragung auf den zu beheizenden Gegenstand nicht gewährleistet.

Der Erfindung liegt die Aufgabe zugrunde, eine Temperiereinrichtung der eingangs genannten Gattung derart weiterzubilden, daß sie dank einer relativ geringen Wandstärke der verhältnismäßig flexiblen Temperierschalen und einer dadurch erzielbaren intensiveren Kontaktierung bei kostengünstiger Fertigung eine raschere Temperierung gewährleistet.

Diese Aufgabe wird durch eine Temperiereinrichtung entsprechend den Merkmalen des Patentanspruches 1 gelöst.

Bei dieser Lösung liegt der Quotient Schalendicke/Durchmesser des rohrartigen Temperierelementes ungefähr bei 2. Die Wandung der Schale ist also etwa nur doppelt so dick wie der Durchmesser des Temperierelementes oder ist sogar dünner, ohne daß die Kontaktfläche nennenswert eingeschränkt wäre.

Eine wesentliche Voraussetzung für die Minimierung der Schalendicke besteht darin, daß bei der Herstellung der Temperierschale das geschmolzene Metall, z.B. Aluminium, im Druckgußverfahren unter sehr hohem Druck bis hin zu 13·10⁷ Pa (1300 bar) und darüber in eine Druckgußform eingespritzt werden kann, in welcher das Temperierelement zwischen den Formhälften absolut sicher festgeklemmt ist. Durch ein solches Festklemmen ist sichergestellt, daß das Temperierelement trotz der starken Beaufschlagung durch das mit hoher Geschwindigkeit einströmende flüssige Metall seine Position nicht verändert. Eine extrem hohe Einspritzgeschwindigkeit ist erforderlich, weil aufgrund des relativ kleinen Formhohlraumes zur Bildung der Schale nur eine geringe Metallmenge erforderlich ist, die wegen der relativ großen inneren Oberfläche des Formhohlraums einer raschen Abkühlung unterliegt. Es ist daher erforderlich, den Einspritzvorgang so zu gestalten, daß er in der Regel in einer Zeitspanne von Sekunden beendet ist. Um in dieser kurzen Zeit den Formhohlraum vollständig zu füllen, ist eine derartige Positionierung des Temperierelementes im Formhohlraum erforderlich, daß das flüssige Metall in den geringen Räumen zwischen den Schleifen des Temperierelementes und den benachbarten Innenwänden des Formhohlraumes hindurchströmen kann, um auch die Räume zwischen den linearen Abschnitten der Schleifen rasch und vollständig zu füllen. Das rasche Füllen des Formhohlraumes dank eines Druckgießverfahrens mit sehr hohen Spritzdrücken ergibt eine Kontaktfläche der Temperierschale von hoher Qualität, d.h. mit einer glatten gut kontaktierenden Kontaktfläche. Die Erfindung verzichtet prinzipiell auf eine Paarung von Kühlmitteln und Heizmitteln in derselben Temperiereinrichtung und beschränkt sich auf ein einziges mäanderartig gebogenes Temperierelement in jeder der auf den Plastifizierzylinder radial aufpreßbaren Temperierschalen. Dadurch wird zwar der Nachteil einer erweiterten Lagerhaltung in Kauf genommen, bei welcher sowohl Temperierschalen zur Heizung als auch Temperierschalen zur Kühlung vorgesehen sind. Fertigungstechnisch ist ein solcher Nachteil jedoch dadurch weitgehend kompensierbar, daß für die Kühlung und für die Heizung je identisch ausgebildete, in automatischen Biegeverfahren mit gleichen Biegegeräten gleichermaßen herstellbare mäanderförmige Temperierelemente einsetzbar sind, die auch in gleichen Gußformen mit identischen Abstützorganen der Gießformhälften gegen die Strömung des im Extrem im Bruchteil einer Sekunde in die Form 'eingeschossenen' flüssigen Metalls gesichert werden können.

Eine Nachbearbeitung der Temperierschale durch ein zeitraubendes Schleifen oder Fräsen erübrigt sich daher in aller Regel.

In der Gußform liegen die offenen Stützflächen des Temperierelementes auf entsprechenden rippenartigen oder zylindrischen Ausformungen der Innenwände der Gußform zur Fixierung auf. Die im Anspruch 1 genannten Ausnehmungen stellen die Negative der genannten Ausformungen dar. Durch die Minimierung der Wandstärke der Schalen ergibt sich eine wesentliche Einsparung an Gußmetall für die Schalen und somit auch eine dringend erwünschte Herabsetzung des Gewichtes des Plastifizierzylinders. In der fertigen Temperierschale sind die offenen Stützflächen des Temperierelementes der Atmosphäre ausgesetzt, so daß insbesondere bei Erzeugung hoher Temperaturen, eine erhöhte Neigung zu Korrosionen im Bereich der Stützflächen vorliegen kann. Dieser Nachteil wird durch die erfindungsgemäß erzielten Vorteile weit aufgewogen. Im übrigen werden Korrosionstendenzen, die auf einem eventuellen Potentialgefälle zwischen Schalenmetall und Temperierelement-Metall vorliegen könnten, durch eine Weiterbildung entsprechend dem Anspruch 2 vermieden.

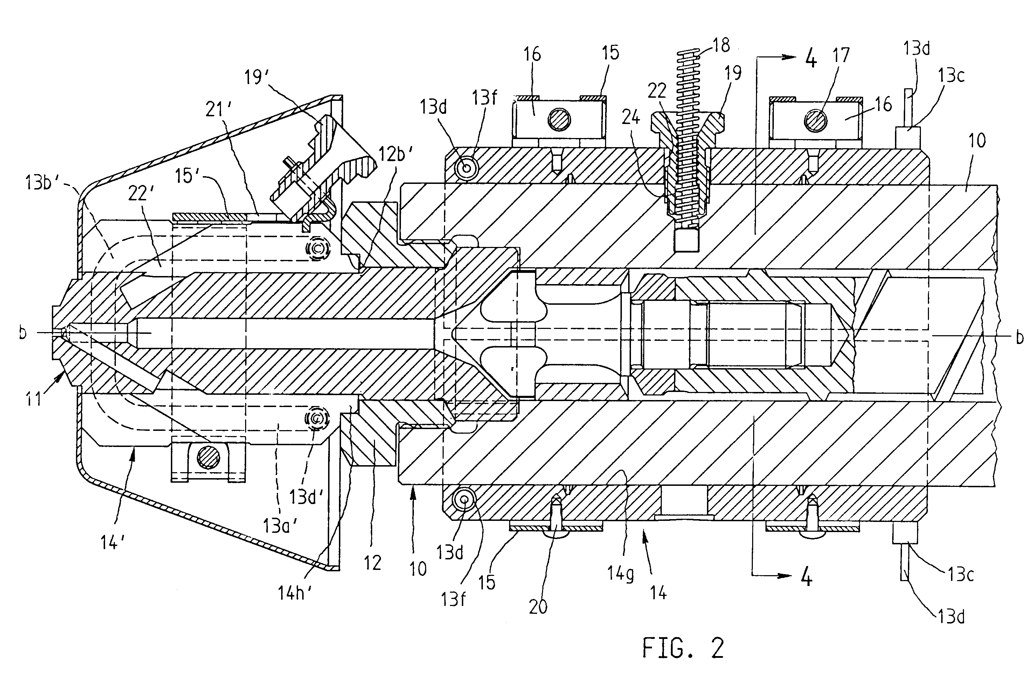

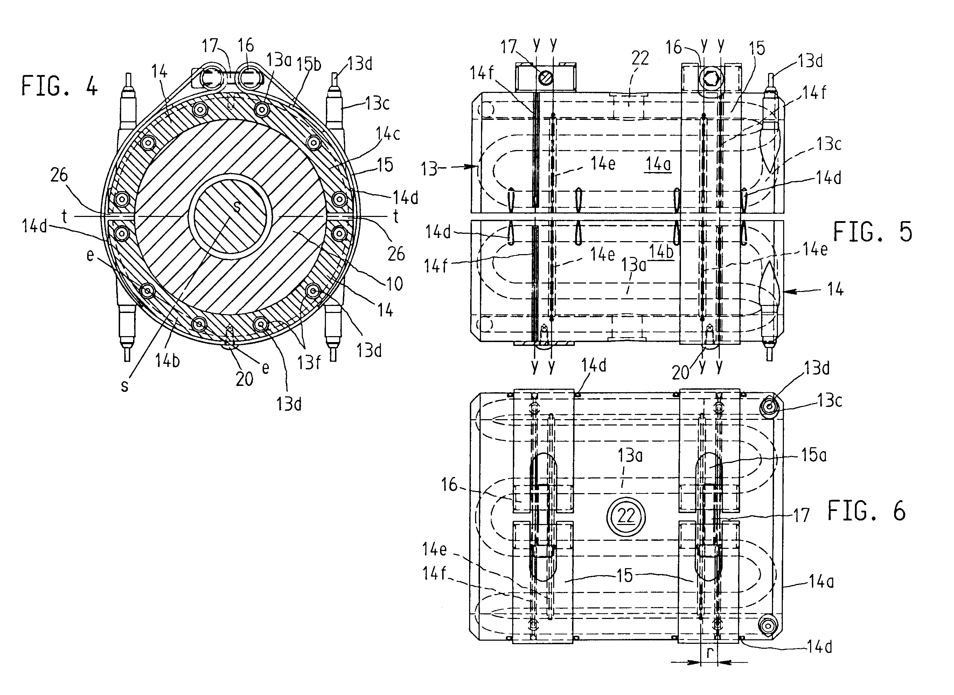

Die Ansprüche 8 und 9 betreffen Verfahren zur Herstellung von Temperierschalen mit je einem in Metall eingegossenen mäanderartigen Temperierelement. Es hat sich gezeigt, daß bei einem wärmezuführenden rohrartigen Temperierelement (Widerstandsheizrohr), bei welchem die gebogenen Abschnitte der Schleifen nicht symmetrisch zu einer Ebene liegen, eine bleibende Verformung in vielen Fällen Schwierigkeiten bereitet. Dies ist insbesondere der Fall, wenn die gebogenen Abschnitte (13b) in Anpassung an den Radius des zu beheizenden Objektes zusätzlich senkrecht zu dieser Ebene ausgebogen werden (wie zum Beispiel beim Widerstandsheizrohr 29 in Fig. 2,6 der US-Patentschrift 3,317,958). Nach dem zweifachen Biegen der Schleifen im Bereich ihrer gebogenen Abschnitte machen sich nämlich oftmals erhebliche und unterschiedlich starke Rückfederungstendenzen bemerkbar. Diese Rückfederungstendenzen führen dazu, daß die linearen Abschnitte der Schleifen von ihrer ursprünglichen Biege-Position abweichen, also z.B. nicht mehr parallel zueinander verlaufen. Solche Rückfederungstendenzen sind vermieden, weil die gebogenen Abschnitte lediglich in einer Ebene zu biegen, nicht aber in einem weiteren Biegevorgang an den Radius des Plastifizierzylinders anzupassen sind.

Die Verfahren zur Herstellung der Temperierschalen sind in der Kombination ihrer Verfahrensschritte wesentlich geprägt von deren Notwendigkeit, rohrartige, lineare Temperierelemente derart mäanderartig zu biegen, daß sie in den Formhohlraum einer Gußform zur Herstellung von Halbschalen einlegbar und dabei ohne wesentliche Rückfederungstendenzen sind. Diesbezüglich unterscheiden sich die erfindungsgemäßen Verfahrensvarianten prinzipiell von bekannten Biegeverfahren (DE-A-2 236 898; US-A-4 112 728; US-A-2 851 082), bei welchen die mäanderartige Biegung von linearen Rohren nur in einer einzigen Ebene erfolgt.

Nachstehend wird die Erfindung anhand der Zeichnung erläutert.

Es zeigen:
- Fig. 1,2: Den Endabschnitt des Plastifizierzylinder mit Düse in perspektivischer Darstellung und im vertikalen Schnitt durch die Spritzachse,
- Fig. 3: die Anordnung gemäß den Fign. 1,2 in Stirnansicht in vergrößerter Darstellung,
- Fig. 3a: einen Ausschnitt aus der Anordnung gemäß Fig. 3,
- Fig. 4: einen Schnitt nach 4-4 von Fig. 2 (etwas verkleinert),
- Fig. 5: zwei zu einer Manschette zusammengefügte Temperierschalen für den Plastifizierzylinder in Seitenansicht,
- Fig. 6: eine Temperierschale gemäß Fig. 5 in Draufsicht,
- Fig. 7: die Schale gemäß Fig. 6 bei abgenommenen Spannbändern in vergrößerter Darstellung,
- Fig. 7a,7b: einen Schnitt durch die Schale gemäß Fig. 7 nach den Linien 7a-7a und 7b-7b,
- Fig. 7c: die Schale gemäß Fig. 7 in Seitenansicht,
- Fig. 8-10: eine für die Düse bestimmte Temperierschale in Stirn- und Innenansicht sowie in Draufsicht,
- Fig. 11: das in eine Schale gemäß den Fign. 8-10 einzugießende Temperierelement,
- Fig. 12: eine Variante der Heizeinrichtung in einer Darstellung entsprechend Fig. 2,
- Fig. 13-16: die zur Variante gemäß Fig. 12 gehörende Temperierschale bzw. das zu dieser Variante gehörende Temperierelement in einer Darstellung entsprechend den Fign. 8-11,
- Fig. 17, 18: zwei Varianten des Temperierelementes in schematisch dargestellten Abwicklungen,
- Fig. 19, 20: eine schematisch dargestellte Gußform mit eingeklemmtem Temperierelement in Schnitten, welche den Schnitten 7a-7a und 7b-7b durch die Temperierschale in Fig. 7 entsprechen und
- Fig. 21; 22a, 22b: Schematas zum Verfahren zur Herstellung der Temperiereinrichtung.

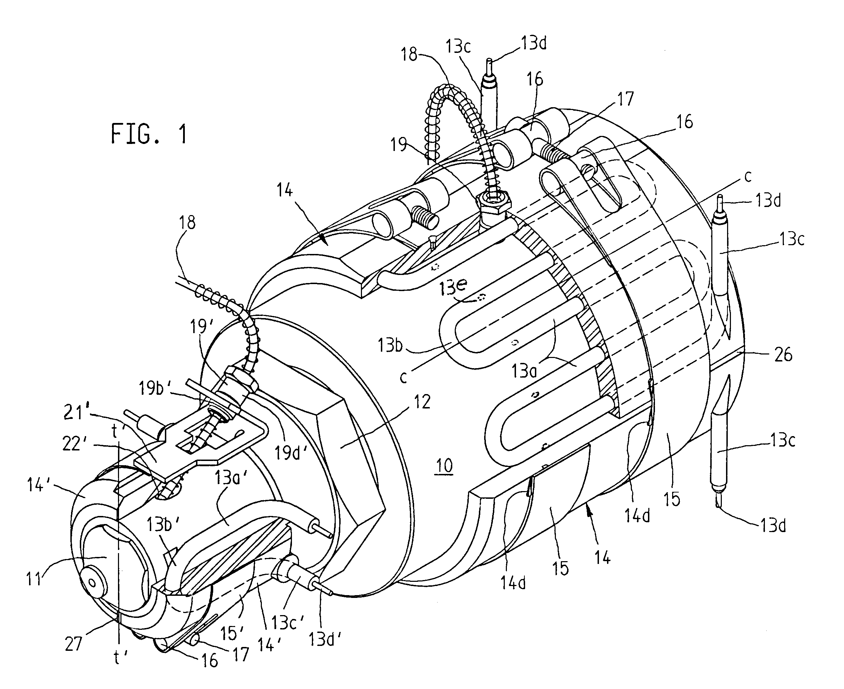

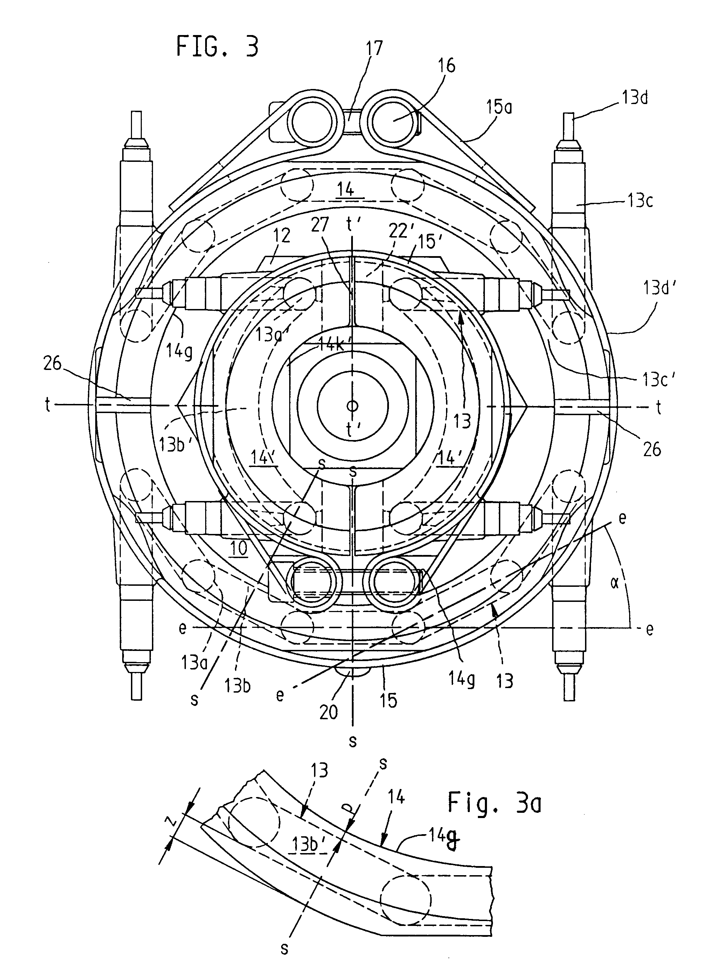

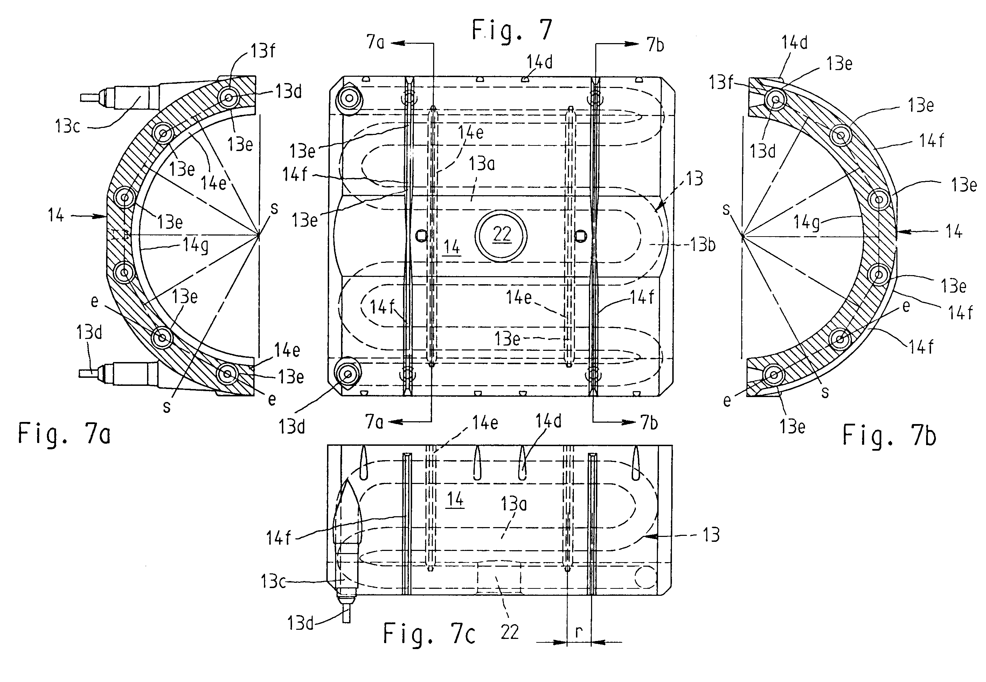

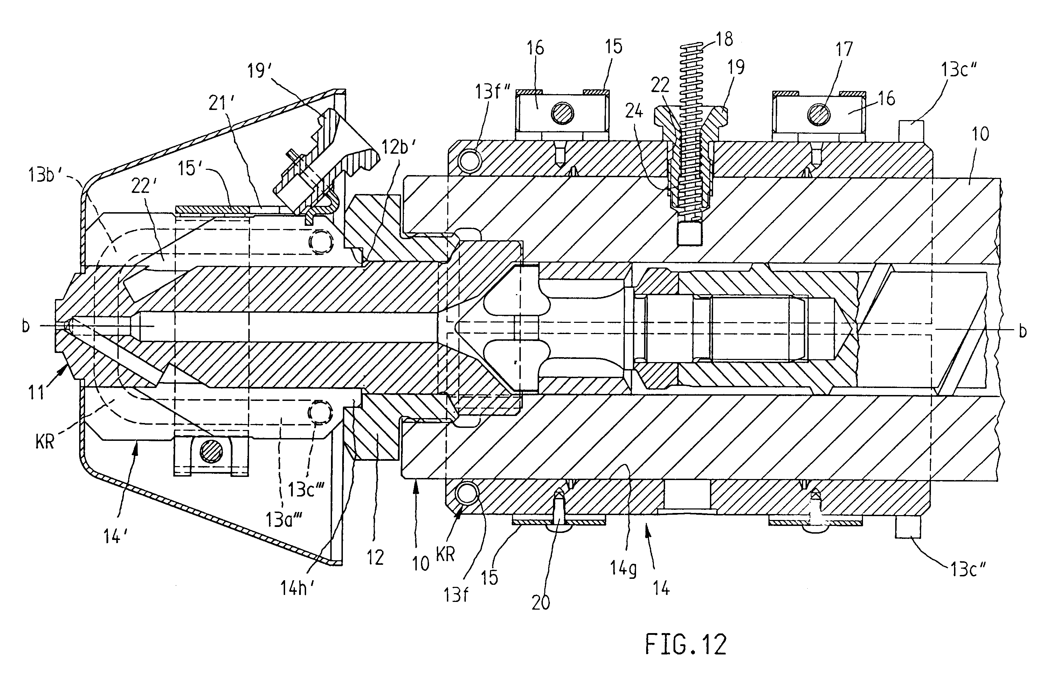

Im zeichnerisch dargestellten Ausführungsbeispiel ist die Temperiereinrichtung am Plastifizierzylinder und an der Düse einer Kunststoff-Spritzgießmaschine dargestellt. Zunächst wird auf die Temperiereinrichtung am Plastifizierzylinder eingegangen: Wesentlicher Bestandteil der Temperiereinrichtung sind aus jeweils zwei Temperierschalen 14 aufgebaute Manschetten, welche den Plastifizierzylinder 10 umschließen. Entsprechend der Länge des Plastifizierzylinders 10 sind mehrere Manschetten auf dem Plastifizierzylinder 10 axial aneinandergereiht. Aus der Zeichnung ist nur die der Düse benachbarte Manschette ersichtlich. Die Schalen 14 weisen als Kontaktfläche 14g je eine innere Mantelfläche sowie einer zur Kontaktfläche etwa konzentrische äußere Mantelfläche auf. Die beiden Schalen 14 einer Manschette sind mit Hilfe von zwei lösbaren Spannbändern 15 auf die zu temperierende Mantelfläche aufpreßbar. In jeder Schale 14 ist ein einziges Temperierelement eingegossen, das aus einem linearen Rohr derart geformt ist, daß es mehrere Schleifen 13 je mit zwei linearen Abschnitten 13a und einem gebogenen Abschnitt 13b aufweist. Jede Schleife 13 liegt etwa symmetrisch zu einer Mantellinie c-c des Plastifizierzylinders 10. Jedes Temperierelement weist freie, d.h. vom Gußmetall unbedeckte Stützflächen 13e auf. An diesen münden Ausnehmungen 14e,14f (Fig. 7,7a-7c,9,14), die von der inneren und äußeren Mantelfläche der zugehörigen Schale 14 ausgehen. Das die Oberfläche des Temperierelementes bildende Metall ist zumindest im Bereich der Stützflächen 13e,13e′ in der elektrochemischen Spannungsreihe so hoch oder höher angesiedelt als das Metall, in welches das Temperierelement eingegossen ist. Die Schleifen 13 des mäanderartigen Temperierelementes sind in stumpfwinklig zueinander und senkrecht zu Radialen s-s des Plastifizierzylinders 10 stehenden Ebenen e-e (Fig. 3,4,7a,7b) angeordnet. Der in der Radialen s-s abgenommene Abstand z (Fig. 3a) des gebogenen Abschnittes 13b von der äußeren Mantelfläche ist um das mehrfache größer als der entsprechende Abstand p (Fig. 3a) von der inneren Mantelfläche. Wie insbesondere aus den Fign. 5 und 6 ersichtlich, sind die inneren Ausnehmungen 14e , welche sich von der inneren Mantelfläche der Schalen 14 her erstrecken gegenüber den äußeren Ausnehmungen 14f , welche sich von der äußeren Mantelfläche erstrecken, axial gegeneinander versetzt. Die Versetzungsstrecke r ist in den Fign. 6 und 7 erkennbar. Die rillenartigen Ausnehmungen 14e,14f sind in senkrecht zur Spritzachse b-b stehenden Ebenen y-y angeordnet. Die linearen Abschnitte 13a der Schleifen 13 grenzen je an wenigstens zwei innere und zwei äußere Ausnehmungen an. Die Spannbänder 15 sind mittels eines Spannbolzens 17 und mittels Lagerbolzen 16 spannbar. Bei der Montage sind die Spannbänder 15 an Anformungen 14d geführt bzw. axial festgelegt. In Umfangrichtung sind die Spannbänder mittels Arretierstiften 20 fixierbar. Die Fugen zwischen den beiden Schalen 14 der Manschetten liegen in einer horizontalen Ebene (Fugenebene t-t in Fig. 3,4). Die Anschlußenden 13c bzw. 13c˝ (Fig. 12) der Temperierelemente, die aus der Schale 14 herausgeführt sind, verlaufen jeweils senkrecht zur Fugenebene t-t. Wie insbesondere aus den Fign. 1 und 2 erkennbar, weist die jeweils obere Schale 14 einer Manschette eine Durchtrittsöffnung 22 für einen Thermofühler 18 auf. Der Thermofühler 18 ist durch eine Befestigungshohlschraube 19 gehalten, in welcher er mittels einer Spiralfeder axial verstellbar aufgenommen ist. Da ein Innengewinde der Befestigungshohlschraube 19′ in die Federspirale eingreift, kann durch Drehen der Befestigungshohlschraube 19′ die an einer Schulter des Thermofühlers 18 abgestützte Federspirale vorgespannt und dadurch der Thermofühler axial belastet werden.

Im folgenden wird die Temperiereinrichtung an der Düse beschrieben:

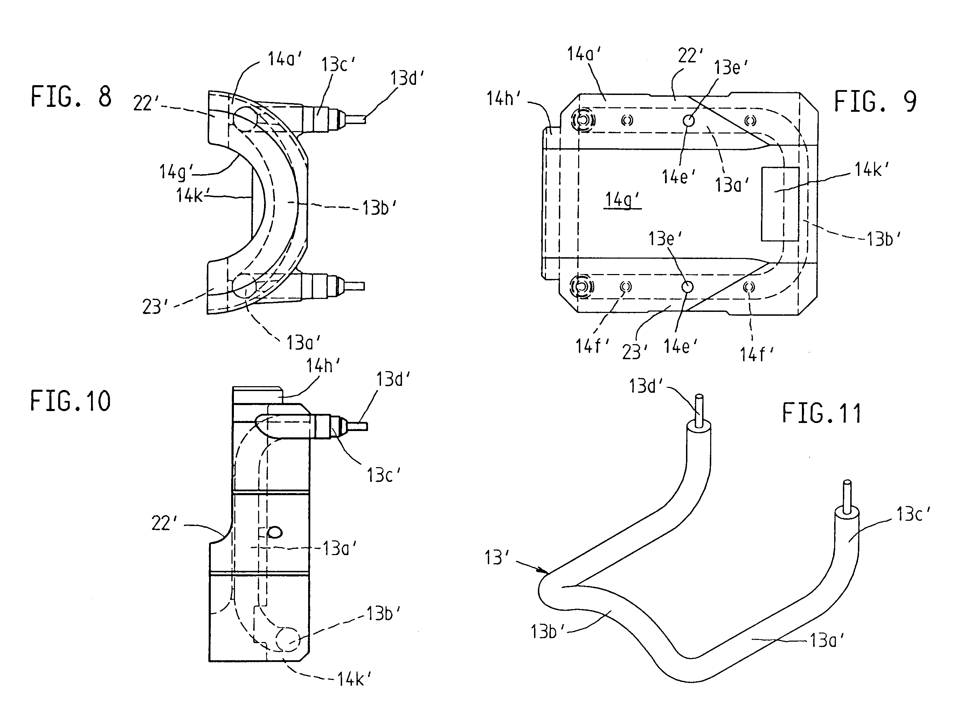

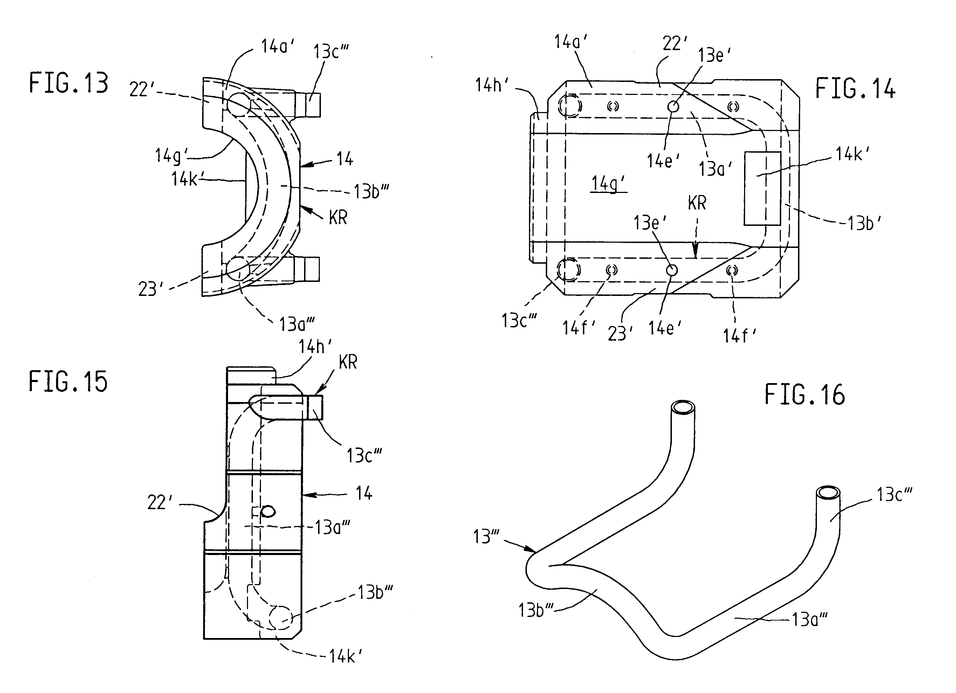

An dieser sind zwei Schalen 14' vorgesehen, die sich zu einer Manschette ergänzen. Die Manschette ist mittels eines einzigen Spannbandes 15' auf die Mantelfläche der Düse 11 aufgepreßt. Die Fugen 27 der beiden Schalen 14' liegen in einer vertikalen Ebene (Fugenebene t'-t' in Fig. 1,3). Die freien linearen Anschlußenden 13c' (Fig. 1-11 und 13''' in Fig. 12-16) verlaufen jeweils senkrecht zur Fugenebene t'-t'. Die beiden Temperierelemente weisen je eine einzige Schleife 13' auf (Fig. 8-11; 13-16). In der vertikalen Fuge 27 ist durch entsprechende Aussparungen an den Schalen 14' eine Durchtrittsöffnung 22' für einen Thermofühler 18 gebildet. Der Thermofühler 18 ist mittels eins Halteelementes 21' gehalten. Das Halteelement 21' ist Bestandteil des Spannbandes 15'. Der Thermofühler ist mittels einer Spirale axial belastbar. Im Ausführungsbeispiel einer Düse gemäß den Fign. 1 bis 11 weisen die Schalen Anformungen 14h' auf, welche an einer radialen Schulter 12b' einer Hohlschraube 12 anliegen. Mittels der Hohlschraube 12 ist der Düsenkörper mit dem Plastifizierzylinder 10 verbunden. Das Spannband 15' ist in einem vorderen Abschnitt der Düse vor der Hohl schraube 19' für den Thermofühler 18 angeordnet. Der gebogene Abschnitt 13b' liegt mit den beiden linearen Abschnitten 13a' in einer vertikalen Ebene. Wie aus Fig. 9,14 ersichtlich, sind die Ausnehmungen 14e',14f' zylindrische Kanäle.

Im Ausführungsbeispiel gemäß den Fign. 12-16 ist das Spannband 15c' in einem rückwärtigen Abschnitt der Düse angeordnet und liegt daher im Bereich des Thermofühlers 18. Die Befestigungshohlschraube 19' durchgreift daher das Spannband 15' über eine Ausnehmung, die vorne und hinten von schmalen Stegen des Spannbandes 15' begrenzt ist, wie insbesondere aus den Fign. 13 bis 16 erkennbar, ist der gebogene Abschnitt 13b' des Temperierelementes aus der vertikalen Ebene, in welcher die linearen Abschnitte liegen, in Anpassung an den Radius des zylindrischen Düsenkörpers nach außen ausgebogen.

Während im Ausführungsbeispiel der Fign. 1-11 die Temperierelemente als Widerstandsheizelemente ausgebildet sind, zeigt das Ausführungsbeispiel der Fign. 12-16 Kühlrohre KR, die von einem Kühlmedium durchflossen sind. Das Kühlmedium wird über die freien Anschlußenden 13c'' der Kühlrohre der Schalen 14 am Plastifizierzylinder 10 bzw. über die freien Anschlußenden 13c''' des Kühlrohres KR an der Düse 11 zugeführt bzw. abgeleitet.

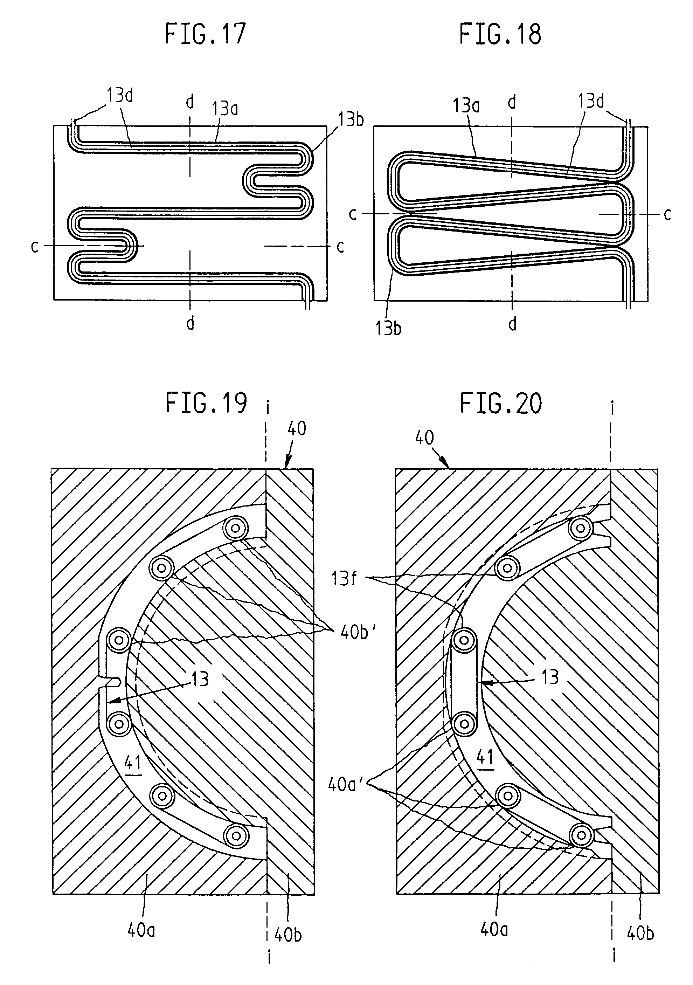

Figur 18 Zeigt eine Gestaltung der Schleifen mit der eine höhere Heizleistung pro Flächeneinheit erreicht werden kann, während Figur 17 eine Anordnung der Schleifen aufweist, die eine bevorzugte Übertragung der Heizleistung an bestimmten Stellen erlaubt. Auch in diesem Fall liegen die Schleifen 13 symmetrisch zu Mantellinien c-c. Durch eine Wendelung des Widerstandsdrahtes im Rohr 13f ist es möglich, die Heizleistung wesentlich zu erhöhen. In diesem Fall ergeben sich größere Durchmesser der Temperierelemente. In den freien Anschlußenden 13c,13c' der als Heizrohre ausgestalteten Temperierelemente wird keine Wärme erzeugt.

Im folgenden wird das Verfahren zur Herstellung der Temperier - schalen anhand der Figuren 19-22 erläutert. In der schematisch dargestellten Gießform gemäß den Fig. 19, 20 befinden sich die Schnitte in einem Abstand voneinander, welcher dem Abstand r in den Fign. 6 und 7c entspricht. Demzufolge liegen die Schnitte in Ebenen, die den Ebenen y-y der Husnehmungen 14f und 14e in der fertigen Temperierschale gemäß den Fign. 7a und 7b entsprechen. Demzufolge sind in Fig. 19 nur die an den innenseitigen Stützflächen 13e und in Fig. 20 nur die an den außenseitigen Stützflächen 13f des Temperierelements angreifenden rippenartigen Ausformungen 40a',40b' erkennbar. Jede rippenartige Ausformung 40a',40b' erstreckt sich mit einem der späteren Temperierschale entsprechenden Radius halbkreisförmig an der den Formhohlraum begrenzenden Wand der Formhälften 40a,40b. Es ist jedoch auch möglich, die rippenartige Ausformung abschnittsweise zu unterbrechen. In diesem Falle verbleiben lediglich einzelne Stützzapfen als "Ausformungen".

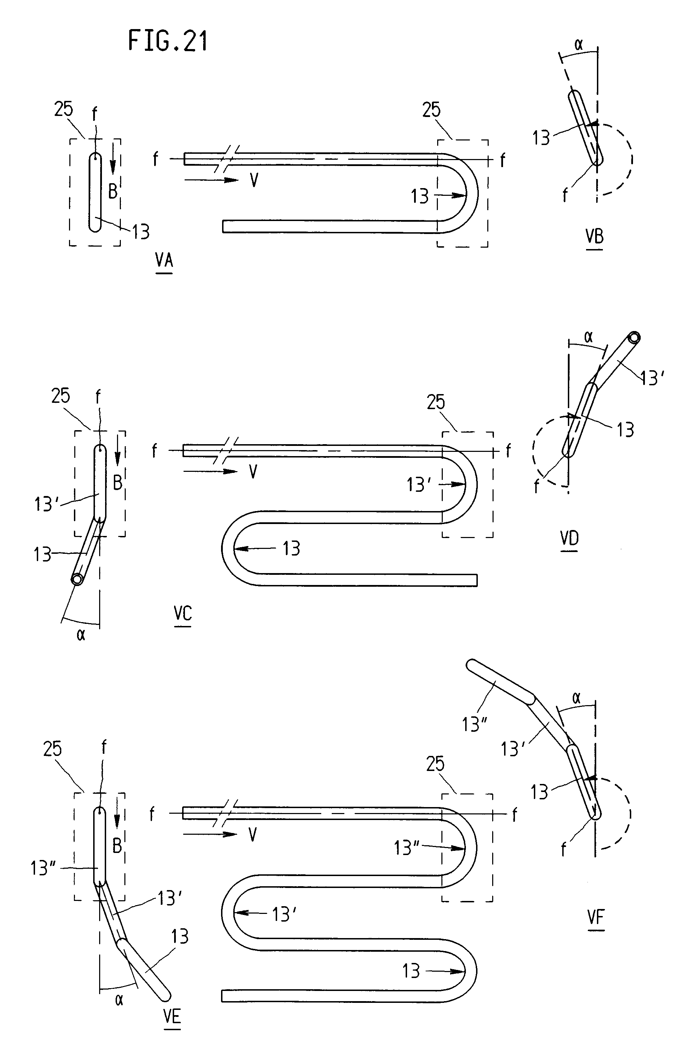

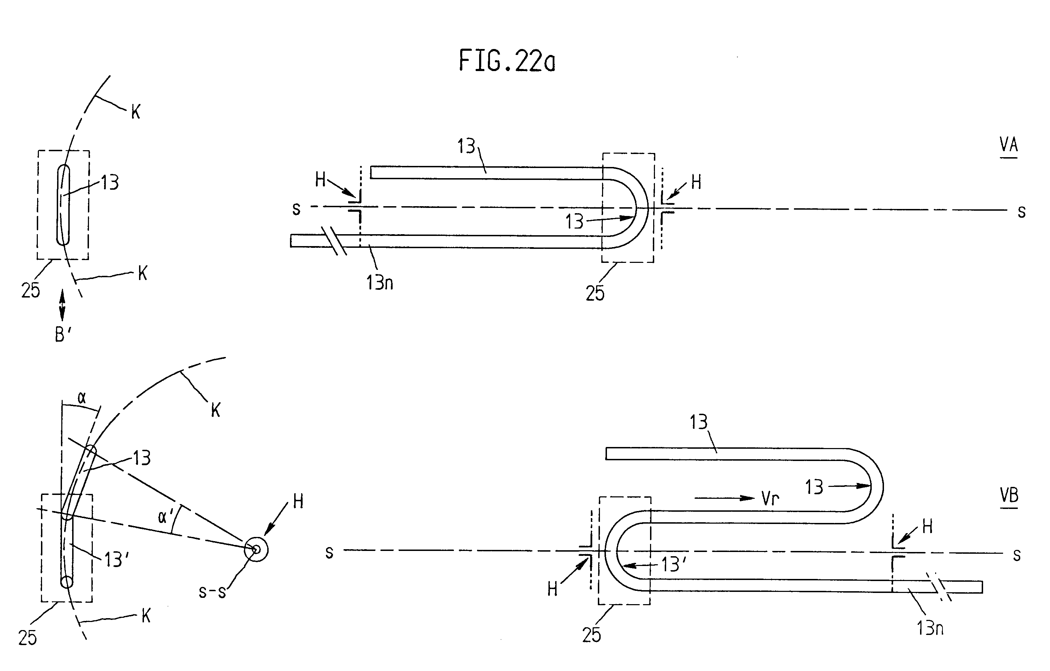

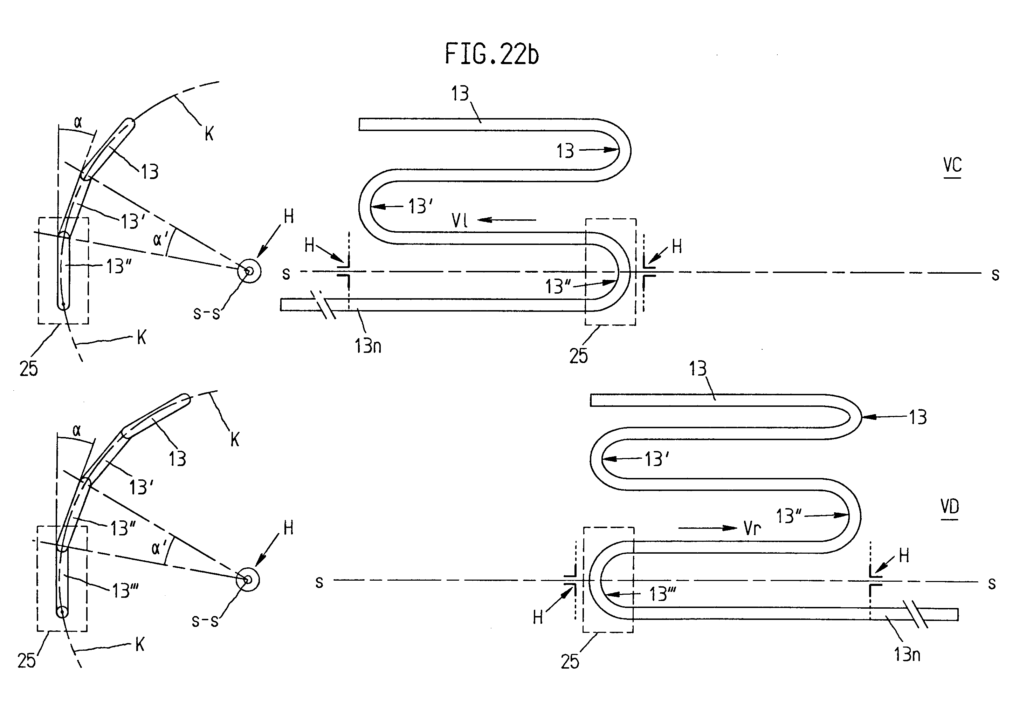

In den Fign. 21,22a,22b sind die Verfahrensschritte zur Herstellung der Temperierelemente anhand von Schematas verdeutlicht, welche einzelne Verfahrensstände VA; VB; VC; VD; VE VF im Verfahren darstellen. In den Verfahrensständen VA, VC und VE ist das schematisch dargestellte Temperierelement je in Stirnansicht und in Seitenansicht gezeigt. Das gleiche gilt für die Verfahrensstände VA, VB, VC und VD in Fig. 22a,22b

Für das Verfahren gilt im einzelnen: Potentielle, rohrartige und lineare Temperierelemente, also Heizrohre oder Kühlrohre werden unter Bildung einer oder mehrerer Schleifen 13, die je einen gebogenen Abschnitt 13b und zwei lineare Abschnitte 13a aufweisen zu mäanderartigen Temperierelementen verformt. Sodann werden diese Temperierelemente je in eine Gußform 40 zwischen Ausformungen 40a' und 40b' der Formhälften 40a,40b einer Gußform festgeklemmt, weiche Ausformungen 40a',40b' in den Formhohlraum 41 hineinragen und auf Stützflächen 13e des Temperierelementes angreifen. Sodann wird das flüssige Metall, vorzugsweise Aluminium bei einem Einspritzdruck zwischen 5·10⁷ bis 13·10⁷ Pa (500 bis 1300 bar) in einer Zeitspanne von höchstens sechs Sekunden in den Formhohlraum 41 eingespritzt. Der Einspritzvorgang kann auch auf den Bruchteil einer Sekunde beschränkt werden, wenn entsprechend gestalterische Voraussetzungen des Formhohlraumes 41 und des darin festgeklemmten mäanderartigen Temperierelementes vorliegen.

In den Ansprüchen 8 und 9 sind zwei unterschiedliche Verfahren niedergelegt, die jedoch gleichermaßen zu Temperierschalen führen.

Der Verfahrensabschnitt zur Herstellung eines mäanderartigen Temperierelementes (Anspruch 8 - Fig. 21) umfaßt folgende Verfahrensschritte:
1. Ein (marktübliches) lineares, rohrartiges Temperierelement wird um seine Achse (Drehachse f-f) drehbar und axial in eine Verschieberichtung V verschiebbar gehaltert.
2. Das so gehalterte Temperierelement wird an einem freien Ende unter Bildung einer ersten Schleife 13 mittels einer Biegeeinrichtung 25 in einer bestimmten Richtung (Biegerichtung B) um 180° umgebogen.
   (Nach diesen beiden Verfahrensschritten ist der in Fig. 21 unter "VA" dargestellte Verfahrensstand erreicht).
3. Das an einem Ende verformte Temperierelement wird in der Drehachse f-f um die Länge einer Schleife in Verschieberichtung V axial verschoben und um einen Zentriwinkel von 180° plus einem spitzen Winkel Alpha (Fig. 3) um die Drehachse f-f entgegen dem Uhrzeigersinn gedreht, wobei der Winkel Alpha zwischen den Ebenen e-e in Fig. 3,4,7a,7b benachbarter Schleifen gebildet ist. (Nun ist der Verfahrensstand VB in Fig. 21 erreicht).
4. Das verformte Ende des Temperierelements wird zusammen mit der ersten Schleife 13 unter Bildung einer zweiten Schleife 13' in der Biegerichtung B um 180° umgebogen (Verfahrensstand VC in Fig. 21).
5. Das so verformte Temperierelement wird in der Drehachse f-f erneut um die Länge einer Schleife axial verschoben und um einen Zentriwinkel von 180° plus dem Winkel Alpha um die Drehachse f-f im Uhrzeigersinn gedreht (Verfahrensstand VD in Fig. 21).
6. Das Ende des Temperierelements wird mit der angeformten ersten 13 und zweiten Schleife 13' unter Bildung einer dritten Schleife 13'' mit Hilfe der Biegeeinrichtung um 180° umgebogen (Verfahrensstand VE in Fig. 21).
7. Das so verformte Temperierelement wird um die Länge einer Schleife 13 erneut axial verschoben und um einen Zentriwinkel von 180° plus dem Winkel Alpha um die Drehachse f-f gedreht (Verfahrensstand VF in Fig. 21).
8. Das Temperierelement wird am verformten Ende zusammen mit der ersten 13, zweiten 13' und dritten Schleife 13'' unter Bildung einer vierten Schleife 13''' in der Biegerichtung B umgebogen.

Das Verfahren kann zur Anfügung weiterer Schleifen im Sinne der bisherigen Verfahrensschritte weitergeführt werden, wobei bei jedem weiteren Verfahrensschritt mit Drehung um die Drehachse f-f jeweils die Drehrichtung gewechselt wird.

Die Variante des Verfahrensabschnittes zur Herstellung eines mäanderartigen Temperierelementes gemäß Anspruch 9 (Fig. 22a;22b) umfaßt folgende Verfahrensschritte:
a) Ein (marktübliches), lineares, rohrartiges Temperierelement wird in einer Haltevorrichtung H, die um eine Drehachse s-s drehbar und in dieser Drehachse in einander entgegengesetzten Richtungen (Verschieberichtung nach rechts Vr oder Verschieberichtung nach links Vl) axial verschiebbar ist, exzentrisch zur Drehachse s-s gehaltert, wobei es in biegebereiter Position in einer stationären Biegevorrichtung 25 aufgenommen ist.
b) Das so gehalterte Temperierelement wird an einem Ende unter Bildung einer ersten Schleife 13 mittels der Biegeeinrichtung 25 in einer Biegeebene B' um 180° umgebogen (Verfahrensstand VA in Fig. 22a).
c) Das so teilweise verformte Temperierelement wird zusammen mit der Halteeinrichtung in der einen Verschieberichtung (Verschieberichtung nach rechts Vr) parallel zur Drehachse s-s etwa um die Länge einer Schleife 13 verschoben und im Gefolge einer Drehung mit der Haltevorrichtung H um die Drehachse s-s um einen Zentriwinkel Alpha′ derart auf einer Kreislinie K bewegt, daß der noch nicht verformte lineare Abschnitt 13n des Temperierelementes in biegebereiter Position von der Biegevorrichtung 25 aufgenommen ist.
d) Das Temperierelement wird am unverformten Ende in der Biegeebene B′ unter Bildung einer zweiten Schleife 13′ um 180° in einer Richtung umgebogen, welcher der Biegerichtung bei Bildung der ersten Schleife 13 entgegengesetzt ist (Verfahrensstand VB in Fig. 22a).
e) Das so verformte Temperierelement wird zusammen mit der Haltevorrichtung in der entgegengesetzten Verschieberichtung (Verschieberichtung nach links Vl) etwa um die Länge einer Schleife parallel zur Drehachse s-s verschoben und im Gefolge einer Drehung mit der Haltevorrichtung um die Drehachse s-s um einen Zentriwinkel Alpha′ derart auf einer Kreislinie K bewegt, daß sein noch nicht verformter, linearer Abschnitt 13n in biegebereiter Position von der Biegevorrichtung 25 aufgenommen ist.
f) Das Temperierelement wird am unverformten Ende in der Biegeebene B′ unter Bildung einer dritten Schleife 13˝ um 180° in einer Richtung umgebogen, welche der Biegerichtung bei Bildung der zweiten Schleife 13′ entgegengesetzt ist (Verfahrensstand VC in Fig. 22b).
g) Das so verformte Temperierelement wird zusammen mit der Haltevorrichtung H in einer Verschieberichtung, die der Verschieberichtung bei Bildung der letzten Schleife 13 entgegengesetzt ist (Verschieberichtung Vr) um etwa die Länge einer Schleife erneut parallel zur Drehachse s-s verschoben und im Gefolge einer Drehung mit der Haltevorrichtung um die Drehachse s-s um einen Zentriwinkel Alpha′ derart auf einer Kreislinie K bewegt, daß sein noch nicht verformter, linearer Abschnitt in biegebereiter Position von der stationären Biegevorrichtung 25 aufgenommen ist.
h) Das Temperierelement wird am unverformten Ende in der Biegeebene B′ unter Bildung einer vierten Schleife 13‴ in einer Biegerichtung umgebogen, welche der Biegerichtung bei Bildung der zweiten Schleife 13′ entspricht (Verfahrensstand VD in Fig. 22b).

Für das Biegeverfahren ist charakteristisch, daß eine stationäre Biegevorrichtung 25 in einer einzigen Biegeebene B′ wechselweise nach der einen und der anderen Seite biegt und daß das jeweils noch nicht verformte, mehr oder weniger lange, freie Ende des Temperierelementes taktweise in biegebereite Position in die Biegevorrichtung 25 eingefahren wird. Letzteres geschieht dadurch, daß eine Haltevorrichtung H in ihrer Drehachse s-s wechselweise in der einen oder anderen Richtung etwa um die Länge einer Schleife axial verschoben und jeweils um einen Zentriwinkel Alpha′ gedreht wird, wobei sich das in der Haltevorrichtung H exzentrisch gehaltene Temperierelement auf einer Kreislinie bewegt.

Der Winkel Alpha ist derjenige spitze Winkel, der zwischen den Ebenen e-e zweier benachbarter Schleifen des fertigen Temperierelementes gebildet ist (Fig. 3; 22a,22b). Die Größe des Zentriwinkels Alpha′ ist abhängig von der Anzahl der Schleifen des Temperierelementes.

## Patentansprüche

1. Temperiereinrichtung an einem mit einer Düse (11) versehenen Plastifizierzylinder (10) einer Kunststoffe verarbeitenden Maschine mit gußmetallenen Schalen (14;14'), die als Kontaktfläche (14g) je eine innere Mantelfläche sowie eine zur Kontaktfläche (14g) etwa konzentrische äußere Mantelfläche aufweisen und mittels Spannbänder (15) auf die zu temperierende Mantelfläche des Plastifizierzylinders (10) bzw. der Düse (11) aufpreßbar sind, wobei sich jeweils zwei Schalen (14;14') zu einer die zu temperierende Mantelfläche umschließenden Manschette ergänzen, und mit in den Schalen (14;14') eingegossenen Temperierelementen, die aus linearen Rohren derart geformt sind, daß sie je wenigstens eine Schleife (13) mit zwei linearen Abschnitten (13a) und einem gebogenen Abschnitt (13b) aufweisen, welche Schleife etwa symmetrisch zu einer Mantellinie (c-c) des Plastifizierzylinders (10) liegt, wobei am Plastifizierzylinder (10) mäanderartige Temperierelemente vorhanden sind, welche je mehrere Schleifen (13) aufweisen, die in stumpfwinklig zueinander und senkrecht zur Radialen (s-s) des Plastifizierzylinders stehenden Ebenen (e-e) angeordnet sind,
dadurch gekennzeichnet, daß in die Schalen (14;14') nur jeweils ein einziges Temperierelement eingegossen ist, das vom Gußmetall freie (vom Gußmetall unbedeckte) Stützflächen (13e,13e') aufweist, an welchen Ausnehmungen (14e,14f;14e',14f') münden, die von der inneren und äußeren Mantelfläche der Schalen (14;14') ausgehen, wobei der in der Radialen (s-s) abgenommene Abstand (z) des gebogenen Abschnittes (13b) der Schleife (13) von der äußeren Mantelfläche größer ist als der entsprechende Abstand (p) von der inneren Mantelfläche.

2. Temperiereinrichtung nach Anspruch 1, dadurch gekennzeichnet, daß das die Oberfläche des Temperierelementes bildende Metall, zumindest im Bereich der Stützflächen (13e;13e') in der elektrochemischen Spannungsreihe so hoch oder höher angesiedelt ist, als das Metall, in welches das Temperierelement eingegossen ist.

3. Temperiereinrichtung nach Anspruch 1 oder 2, dadurch gekennzeichnet, daß innere Ausnehmungen (14e;14e'), welche sich von der inneren Mantelfläche der Schalen (14;14') her erstrecken, gegenüber äußeren Ausnehmungen (14f;14f'), welche sich von der äußeren Mantelfläche her erstrecken, axial gegeneinander versetzt sind, wobei die linearen Abschnitte (13a) der Schleifen (13) am Plastifizierzylinder (10) je an wenigstens zwei innere und zwei äußere Ausnehmungen angrenzen.

4. Temperiereinrichtung nach einem der vorhergehenden Ansprüche, dadurch gekennzeichnet, daß die Fugen (26) zwischen den beiden Schalen (14) der Manschetten am Plastifizierzylinder (10) in einer horizontalen Fugenebene (t-t) und die Fugen (27) der beiden Schalen (14') der Manschette an der Düse (11) in einer vertikalen Fugenebene (t'-t') liegen, wobei die freien, linearen Anschlußenden (13c,13c',13c'',13c''') der Temperierelemente jeweils senkrecht zur Fugenebene (t-t;t'-t') verlaufen.

5. Temperiereinrichtung nach einem der vorhergehenden Ansprüche, dadurch gekennzeichnet, daß die beiden Temperierelemente an der Düse (11) je eine einzige Schleife (13') aufweisen.

6. Temperiereinrichtung nach einem der Ansprüche 4 oder 5, dadurch gekennzeichnet, daß in der vertikalen Fuge (27) an der Düse (11) durch entsprechende Aussparungen an den Schalen (14') eine Durchtrittsöffnung (22') für einen Thermofühler (18') gebildet ist und dieser mittels eines von einem Spannbolzen (17') durchgriffenen und an einem Spannband (15') befestigten Halteelements (21') sowie mittels einer Befestigungshohlschraube (19') gehalten und axial verstellbar ist.

7. Temperiereinrichtung nach einem der vorhergehenden Ansprüche, dadurch gekennzeichnet, daß die beiden identischen Schalen (14') an der Düse (11) je eine über ihre Kontaktfläche (14g') nach innen vorspringende Anformung (14k') aufweisen, welche eine vertikale Schulter der Düse (11) hintergreift.

8. Verfahren zur Herstellung von Schalen (14) für eine Temperiereinrichtung am Plastifizierzylinder nach einem der Ansprüche 1 bis 4, bei welchem potentielle, rohrartige lineare Temperierelemente unter Bildung von mehreren Schleifen (13), die je einen gebogenen Abschnitt (13b) und zwei lineare Abschnitte (13a) aufweisen, zu mäanderartigen Temperierelementen verformt werden, indem man ein lineares, potentielles Temperierelement um seine Achse unter Ausbildung einer Drehachse (f-f) drehbar und axial in einer Verschieberichtung (V) verschiebbar haltert und an einem freien Ende unter Bildung einer ersten Schleife (13) mittels einer Biegeeinrichtung (25) in einer bestimmten Biegerichtung (B) um 180° umbiegt und
indem man danach das an einem Ende verformte Temperierelement in der Drehachse (f-f) um die Länge einer Schleife in Verschieberichtung (V) axial verschiebt und um einen Zentriwinkel von 180° plus einen spitzen Winkel Alpha, welcher zwischen den Ebenen (e-e) benachbarter Schleifen gebildet ist, um die Drehachse (f-f) im bzw. entgegen dem Uhrzeigersinn dreht, und indem man danach das verformte Ende des Temperierelements zusammen mit der ersten Schleife (13) unter Bildung einer zweiten Schleife (13') in der Biegerichtung (B) um 180° umbiegt und indem man sodann das so verformte Temperierelement in der Drehachse (f-f) erneut um die Länge einer Schleife axial verschiebt und um einen Zentriwinkel von 180° plus den Winkel Alpha um die Drehachse (f-f) entgegen bzw. im Uhrzeigersinn dreht und indem man das Ende des Temperierelementes mit der angeformten ersten (13) und zweiten Schleife (13') unter Bildung einer dritten Schleife (13'') mit Hilfe der Biegeeinrichtung (25) um 180° umbiegt usw., sodann diese Temperierelemente mittels Gußformen (40) in Metall eingegossen werden, deren Hohlform je einer Schale (14) entspricht, wobei man das mäanderartige Temperierelement in der Gußform (40) zwischen Ausformungen (40a',40b') der Formhälften (40a,40b) festklemmt, welche Ausformungen in den Formhohlraum (41) hineinragen und in Bereichen diametraler Stützflächen (13e) am Temperierelement angreifen und sodann das flüssige Metall bei einem Einspritzdruck zwischen 5·10⁷ bis 13·10⁷ Pa (500 bis 1300 bar) in einer Zeitspanne von höchstens sechs Sekunden in den Formhohlraum (41) einspritzt.

9. Verfahren zur Herstellung von Schalen (14) für eine Temperiereinrichtung am Plastifizierzylinder nach einem der Ansprüche 1 bis 4, bei welchem potentielle, rohrartige lineare Temperierelemente unter Bildung von mehreren Schleifen (13), die je einen gebogenen Abschnitt (13b) und zwei lineare Abschnitte (13a) aufweisen, zu mäanderartigen Temperierelementen verformt werden, indem folgende Verfahrensschritte durchgeführt werden:
ein lineares, rohrartiges Temperierelement wird in einem Haltegestell (H), das um eine Drehachse (s-s) drehbar und in dieser Drehachse in einander entgegengesetzten Richtungen (Vr,Vl) axial verschiebbar ist, exzentrisch zur Drehachse (s-s) gehaltert, wobei es in biegebereiter Position in einer stationären Biegevorrichtung (25) aufgenommen ist;
das so gehalterte Temperierelement wird an einem Ende unter Bildung einer ersten Schleife (13) mittels der Biegeeinrichtung (25) in einer Biegeebene (B') um 180° umgebogen;
das so teilweise verformte Temperierelement wird zusammen mit der Halteeinrichtung in der einen Verschieberichtung (Vr) parallel zur Drehachse (s-s) etwa um die Länge einer Schleife (13) verschoben und im Gefolge einer Drehung mit der Haltevorrichtung (H) um die Drehachse (s-s) um einen Zentriwinkel (Alpha') derart auf einer Kreislinie (K) bewegt, daß der noch nicht verformte lineare Abschnitt (13n) des Temperierelements in biegebereiter Position von der Biegevorrichtung (25) aufgenommen ist;
das Temperierelement wird am unverformten Ende in der Biegeebene (B') unter Bildung einer zweiten Schleife (13') um 180° in einer Richtung umgebogen, welcher der Biegerichtung bei Bildung der ersten Schleife (13) entgegengesetzt ist;
das so verformte Temperierelement wird zusammen mit der Haltevorrichtung in der entgegengesetzten Verschieberichtung (Vl) etwa um die Länge einer Schleife parallel zur Drehachse (s-s) verschoben und im Gefolge einer Drehung mit der Haltevorrichtung um die Drehachse (s-s) um einen Zentriwinkel (Alpha') derart auf einer Kreislinie (K) bewegt, daß sein noch nicht verformter, linearer Abschnitt (13n) in biegebereiter Position von der Biegevorrichtung (25) aufgenommen ist;
das Temperierelement wird am unverformten Ende in der Biegeebene (B') unter Bildung einer dritten Schleife (13'') um 180° in einer Richtung umgebogen, welche der Biegerichtung bei Bildung der zweiten Schleife (13') entgegengesetzt ist;
sodann werden diese Temperierelemente mittels Gußformen (40) in Metall eingegossen, deren Hohlform je einer Schale (14) entspricht, wobei man das mäanderartige Temperierelement in der Gußform (40) zwischen Ausformungen (40a',40b') der Formhälften (40a,40b) festklemmt, welche Ausformungen in den Formhohlraum (41) hineinragen und in Bereichen diametraler Stützflächen (13e) am Temperierelement angreifen und das flüssige Metall bei einem Einspritzdruck zwischen 5·10⁷ bis 13·10⁷ Pa (500 bis 1300 bar) in einer Zeitspanne von höchstens sechs Sekunden in den Formhohlraum (41) einspritzt.

## Claims

1. Temperature control arrangement on a plasticising cylinder (10), which is provided with a nozzle (11), of a machine which processes plastics materials, including cast metal shells (14;14'), which each have an inner surface as the contact face (14g) and an outer surface which is substantially concentric relative to the contact face (14g), and said shells can be pressed onto the surface to be temperature-controlled of the plasticising cylinder (10), or respectively of the nozzle (11), by means of tensioning bands (15), two respective shells (14;14') being combined to form a sleeve, which surrounds the surface to be temperature-controlled, and including temperature control means, which are incorporated in the shells (14;14') and moulded from linear pipes in such a manner that they each have at least one loop (13) with two linear portions (13a) and one curved portion (13b), which loop lies substantially symmetrically relative to a generatrix (c-c) of the plasticising cylinder (10), serpentine-like temperature control means being provided on the plasticising cylinder (10) and each having a plurality of loops (13), which are disposed in planes (e-e) which extend at obtuse angles relative to one another and perpendicularly relative to the radial (s-s) of the plasticising cylinder, characterised in that only one single temperature control means is incorporated in each of the shells (14;14') and has supporting faces (13e, 13e'), which are free of the cast metal (not covered by the cast metal), recesses (14e,14f;14e',14f') terminating at said supporting faces and extending from the inner and outer surfaces of the shells (14;14'), the spacing (z) between the curved portion (13b) of the loop (13) and the outer surface, when measured with respect to the radial (s-s), being greater than the corresponding spacing (p) between said portion and the inner surface.

2. Temperature control arrangement according to claim 1, characterised in that the metal, forming the surface of the temperature control means, is established in the electrochemical series, at least in the region of the supporting faces (13e;13e'), to be as high as, or higher than, the metal in which the temperature control means is incorporated.

3. Temperature control arrangement according to claim 1 or 2, characterised in that inner recesses (14e;14e'), which extend from the inner surface of the shells (14;14'), are axially offset from one another compared with outer recesses (14f;14f'), which extend from the outer surface, the linear portions (13a) of the loops (13) at the plasticising cylinder (10) each abutting against at least two inner and two outer recesses .

4. Temperature control arrangement according to one of the preceding claims, characterized in that the joints (26) between the two shells (14) of the sleeves on the plasticising cylinder (10) lie in a horizontal joint plane (t-t), and the joints (27) of the two shells (14') of the sleeve at the nozzle (11) lie in a vertical joint plane (t'-t'), the free, linear connecting ends (13c,13c',13c'',13c''') of the temperature control means each extending perpendicularly relative to the joint plane (t-t;t'-t').

5. Temperature control arrangement according to one of the preceding claims, characterised in that the two temperature control means at the nozzle (11) each have a single loop (13').

6. Temperature control arrangement according to one of claims 4 or 5, characterised in that a through-aperture (22') for a thermocouple (18') is formed in the vertical joint (27) at the nozzle (11) by corresponding recesses in the shells (14'), and said thermocouple is retained by means of a retaining element (21'), which is traversed by a tensioning bolt (17') and mounted on a tensioning band (15'), and by means of a hollow securing screw (19'), and is axially adjustable.

7. Temperature control arrangement according to one of the preceding claims, characterised in that the two identical shells (14') at the nozzle (11) each have a moulded-on portion (14k'), which protrudes inwardly over their contact face (14g') and engages behind a vertical shoulder of the nozzle (11).

8. Method of producing shells (14) for a temperature control arrangement on the plasticising cylinder according to one of claims 1 to 4, wherein potential, tubular, linear temperature control means are deformed into serpentine-like temperature control means so as to form a plurality of loops (13), which each have a curved portion (13b) and two linear portions (13a), in that a linear, potential temperature control means is mounted so as to be rotatable about its axis to form an axis of rotation (f-f) and so as to be axially displaceable in a displacement direction (V) and is bent at a free end through 180° in a predetermined bending direction (B) by means of a bending arrangement (25) so as to form a first loop (13), and in that the temperature control means, which is deformed at one end, is then axially displaced in the displacement direction (V) with respect to the axis of rotation (f-f) for a distance corresponding to the length of a loop and rotated in a clockwise or anti-clockwise direction about the axis of rotation (f-f) through a sector angle of 180°, plus an acute angle alpha, which is formed between the planes (e-e) of adjacent loops, and in that the deformed end of the temperature control means, together with the first loop (13), is then bent through 180° in the bending direction (B) so as to form a second loop (13'), and in that the temperature control means, which is thus deformed, is then axially displaced again with respect to the axis of rotation (f-f) for a distance corresponding to the length of a loop and rotated in an anti-clockwise or clockwise direction about the axis of rotation (f-f) through a sector angle of 180°, plus the angle alpha, and in that the end of the temperature control means having the moulded-on first loop (13) and second loop (13') is bent through 180° by means of the bending arrangement (25) so as to form a third loop (13''), and so on, then these temperature control means are cast in metal by means of casting moulds (40), the hollow configuration of each mould corresponding to a shell (14), the serpentine-like temperature control means being fixedly clamped in the casting mould (40) between projection members (40a',40b') of the mould halves (40a,40b), which projection members protrude into the mould cavity (41) and co-operate with the temperature control means in regions of diametrical supporting faces (13e), and then the fluid metal is injected into the mould cavity (41) at an injection pressure of between 5.10⁷ and 13.10⁷ Pa (between 500 and 1300 bar) in a maximum time interval of six seconds.

9. Method of producing shells (14) for a temperature control arrangement on the plasticising cylinder according to one of claims 1 to 4, wherein potential, tubular, linear temperature control means are deformed into serpentine-like temperature control means so as to form a plurality of loops (13), which each have a curved portion (13b) and two linear portions (13a), in which the following method steps are effected:
a linear, tubular temperature control means is mounted in a retaining frame (H) eccentrically relative to the axis of rotation (s-s), which frame is rotatable about an axis of rotation (s-s) and is axially displaceable in oppositely orientated directions (Vr,Vl) with respect to this axis of rotation, said temperature control means being accommodated in a stationary bending arrangement (25) in a position ready for bending;
the temperature control means, which is thus mounted, is bent at one end through 180° in a bending plane (B') by means of the bending arrangement (25) so as to form a first loop (13);
the temperature control means, which is thus partially deformed, is displaced together with the retaining means in one displacement direction (Vr) parallel to the axis of rotation (s-s) for a distance substantially corresponding to the length of a loop (13) and, as a result of a rotation with the retaining means (H) about the axis of rotation (s-s) through a sector angle (alpha'), is moved along a circular line K) in such a manner that the linear portion (13n) of the temperature control means, which has not yet been deformed, is received by the bending arrangement (25) in a position ready for bending;
at the non-deformed end, the temperature control means is bent through 180° in the bending plane (B') in a direction which is opposite the bending direction used to form the first loop (13) so as to form a second loop (13');
the temperature control means, thus deformed, is displaced, together with the retaining means, in the oppositely orientated displacement direction (Vl) parallel to the axis of rotation (s-s) for a distance substantially corresponding to the length of a loop and, as a result of a rotation with the retaining means about the axis of rotation (s-s) through a sector angle (alpha'), is moved along a circular line (K) in such a manner that its linear portion (13n), which has not yet been deformed, is received by the bending arrangement in a position ready for bending;
at the non-deformed end, the temperature control means is bent through 180° in the bending plane (B') in a direction which is opposite the bending direction used to form the second loop (13') so as to form a third loop (13'');
these temperature control means are then cast in metal by means of casting moulds (40), the hollow configuration of each mould corresponding to a shell (14), the serpentine-like temperature control means being fixedly clamped in the casting mould (40) between projection members (40a',40b') of the mould halves (40a,40b), which projection members protrude into the mould cavity (41) and co-operate with the temperature control means in regions of diametrical supporting faces (13e), and then the fluid metal is injected into the mould cavity (41) at an injection pressure of between 5.10⁷ and 13.10⁷ Pa (between 500 and 1300 bar) in a maximum time interval of six seconds.

## Revendications

1. Dispositif d'équilibrage de température pour un cylindre de plastification (10), pourvu d'une buse (11), d'une machine de transformation de matières plastiques, avec des coques (14; 14') en métal moulé, qui présentent chacune une face d'enveloppe intérieure comme face de contact (14g) ainsi qu'une face d'enveloppe extérieure approximativement concentrique à la face de contact (14g) et qui peuvent être pressées sur la face d'enveloppe à équilibrer en température du cylindre de plastification (10) ou de la buse (11) au moyen de bandes de serrage (15), deux coques (14; 14') se complétant chaque fois en une manchette entourant la face d'enveloppe à équilibrer en température, et avec des éléments d'équilibrage de température pris au moulage dans les coques (14; 14'), qui sont façonnés à partir de tubes linéaires de telle sorte qu'ils présentent chacun au moins une boucle (13) avec deux parties linéaires (13a) et une partie coudée (13b), boucle qui est disposée approximativement symétriquement à une génératrice (c-c) du cylindre de plastification (10), des éléments d'équilibrage de température en méandres étant présents sur le cylindre de plastification (10), éléments qui présentent chacun plusieurs boucles (13) qui sont disposées dans des plans (e-e) situés sous un angle obtus les uns par rapport aux autres et perpendiculairement à la radiale (s-s) du cylindre de plastification,
caractérisé en ce qu'un seul élément d'équilibrage de température est pris au moulage dans chacune des coques (14; 14'), élément qui présente des faces d'appui (13e, 13e') dépourvues de métal moulé (non recouvertes de métal moulé), sur lesquelles débouchent des évidements (14e, 14f; 14e', 14f') qui partent de la face d'enveloppe intérieure et de la face d'enveloppe extérieure des coques (14; 14'), la distance (z), prise sur la radiale (s-s), de la partie coudée (13b) de la boucle (13) à la face d'enveloppe extérieure étant supérieure à la distance correspondante (p) à la face d'enveloppe intérieure.

2. Dispositif d'équilibrage de température selon la revendication 1, caractérisé en ce que le métal constituant la surface de l'élément d'équilibrage de température, au moins dans la région des faces d'appui (13e; 13e'), se situe aussi haut ou plus haut, dans la série électrochimique des tensions, que le métal dans lequel l'élément d'équilibrage de température est pris au moulage.

3. Dispositif d'équilibrage de température selon la revendication 1 ou 2, caractérisé en ce que des évidements intérieurs (14e; 14e'), qui s'étendent à partir de la face d'enveloppe intérieure des coques (14; 14'), sont axialement décalés par rapport à des évidements extérieurs (14f; 14f'), qui s'étendent à partir de la face d'enveloppe extérieure, les parties linéaires (13a) des boucles (13) étant, sur le cylindre de plastification (10), chacune limitrophes d'au moins deux évidements intérieurs et deux évidements extérieurs.

4. Dispositif d'équilibrage de température selon l'une des revendications précédentes, caractérisé en ce que les joints (26) entre les deux coques (14) des manchettes pour le cylindre de plastification (10) se situent dans un plan de joint horizontal (t-t), et les joints (27) des deux coques (14') de la manchette pour la buse (11) se situent dans un plan de joint vertical (t'-t'), les extrémités linéaires libres de raccordement (13c, 13c', 13c'', 13c''') des éléments d'équilibrage de température s'étendant respectivement perpendiculairement au plan de joint (t-t ; t't').

5. Dispositif d'équilibrage de température selon l'une des revendications précédentes, caractérisé en ce que les deux éléments d'équilibrage de température pour la buse (11) présentent chacun une seule boucle (13').

6. Dispositif d'équilibrage de température selon l'une des revendications 4 ou 5, caractérisé en ce qu'une ouverture de passage (22') pour un capteur de température (18') est formée dans le joint vertical (27) sur la buse (11) par des évidements correspondants dans les coques (14'), et ce capteur peut être déplacé axialement et est maintenu au moyen d'un élément de maintien (21'), fixé sur une bande de serrage (15') et traversé par une goupille de serrage (17'), ainsi qu'au moyen d'un boulon de fixation creux (19').

7. Dispositif d'équilibrage de température selon l'une des revendications précédentes, caractérisé en ce que les deux coques identiques (14') sur la buse (11) présentent chacune une formation (14k') faisant saillie de leur face de contact (14g') vers l'intérieur, qui s'engage derrière un épaulement vertical de la buse (11).

8. Procédé de fabrication de coques (14) pour un dispositif d'équilibrage de température sur le cylindre de plastification selon l'une des revendications 1 à 4, selon lequel des éléments potentiels d'équilibrage de température, tubulaires et linéaires, sont déformés en éléments d'équilibrage de température en méandres en formant plusieurs boucles (13) qui présentent chacune une partie coudée (13b) et deux parties linéaires (13a),
par le fait qu'on maintient un élément potentiel linéaire d'équilibrage de température à rotation autour de son axe en formant un axe de rotation (f-f) et à translation axiale dans une direction de translation (V), et on le recourbe à une extrémité libre à 180° dans une direction déterminée de cintrage (B) au moyen d'un dispositif de cintrage (25), formant ainsi une première boucle (13), par le fait que l'élément d'équilibrage de température déformé à une extrémité est ensuite déplacé axialement dans l'axe de rotation (f-f) de la longueur d'une boucle dans la direction de translation (V), et tourné autour de l'axe de rotation (f-f) dans le sens horaire ou anti-horaire d'un angle au centre de 180° plus un angle aigu alpha, qui est formé entre les plans (e-e) de boucles voisines, et on recourbe ensuite à 180° dans la direction de cintrage (B) l'extrémité déformée de l'élément d'équilibrage de température présentant la première boucle (13), formant ainsi une deuxième boucle (13'), puis on déplace à nouveau axialement de la longueur d'une boucle dans l'axe de rotation (f-f) l'élément d'équilibrage de température ainsi déformé, et on le tourne autour de l'axe de rotation (f-f) dans le sens anti-horaire ou horaire d'un angle au centre de 180° plus l'angle alpha,
et par le fait qu'on recourbe à 180° à l'aide du dispositif de cintrage (25) l'extrémité de l'élément d'équilibrage de température présentant la première boucle (13) et la deuxième boucle (13'), formant ainsi une troisième boucle (13''), et ainsi de suite, et ces éléments d'équilibrage de température sont ensuite pris au moulage dans du métal au moyen de moules (40) dont la forme creuse correspond chaque fois à une coque (14), l'élément d'équilibrage de température en méandres étant bloqué par serrage dans le moule (40) entre des formations (40a', 40b') des demi-moules (40a, 40b), lesquelles pénètrent dans la cavité de moule (41) et atteignent l'élément d'équilibrage de température dans la région de faces d'appui (13e) diamétralement opposées, et on injecte ensuite le métal liquide dans la cavité de moule (41) à une pression d'injection comprise entre 5.10⁷ et 13.10⁷ Pa (500 et 1300 bars) et en une durée d'au plus six secondes.

9. Procédé de fabrication de coques (14) pour un dispositif d'équilibrage de température sur le cylindre de plastification selon l'une des revendications 1 à 4, selon lequel des éléments potentiels d'équilibrage de température, tubulaires et linéaires, sont déformés en éléments d'équilibrage de température en méandres en formant plusieurs boucles (13) qui présentent chacune une partie coudée (13b) et deux parties linéaires (13a),
par le fait qu'on accomplit les étapes de procédé suivantes :
un élément linéaire et tubulaire d'équilibrage de température est, dans un bâti de maintien (H) qui est rotatif autour d'un axe de rotation (s-s) et déplaçable axialement dans cet axe de rotation dans des directions mutuellement opposées (Vr, Vl), maintenu excentriquement à l'axe de rotation (s-s), en étant reçu dans une position prête au cintrage dans un dispositif de cintrage stationnaire (25) ;
l'élément d'équilibrage de température ainsi maintenu est recourbé à une extrémité à 180° dans un plan de cintrage (B') au moyen du dispositif de cintrage (25), formant ainsi une première boucle (13) ;
l'élément d'équilibrage de température ainsi partiellement déformé est translaté conjointement avec le dispositif de maintien approximativement de la longueur d'une boucle (13) parallèlement à l'axe de rotation (s-s) dans une direction de translation (Vr) et, par suite d'une rotation avec le dispositif de maintien (H) d'un angle au centre (alpha') autour de l'axe de rotation (s-s), déplacé sur une trajectoire circulaire (K) de telle sorte que la partie linéaire non encore déformée (13n) de l'élément d'équilibrage de température est reçue dans une position prête au cintrage par le dispositif de cintrage (25) ;
l'élément d'équilibrage de température est recourbé à 180° à l'extrémité non déformée dans le plan de cintrage (B') dans une direction qui est opposée à la direction de cintrage lors de la formation de la première boucle (13), formant ainsi une deuxième bouche (13');
l'élément d'équilibrage de température ainsi déformé est translaté conjointement avec le dispositif de maintien approximativement de la longueur d'une bouche (13) parallèlement à l'axe de rotation (s-s) dans la direction de translation opposée (Vl) et, par suite d'une rotation avec le dispositif de maintien d'un angle au centre (alpha') autour de l'axe de rotation (s-s), déplacé sur une trajectoire circulaire (K) de telle sorte que sa partie linéaire non encore déformée (13n) est reçue dans une position prête au cintrage par le dispositif de cintrage (25) ;
l'élément d'équilibrage de température est recourbé à 180° à l'extrémité non déformée dans le plan de cintrage (B') dans une direction qui est opposée à la direction de cintrage lors de la formation de la deuxième boucle (13'), formant ainsi une troisième boucle (13'');
ces éléments d'équilibrage de température sont ensuite pris au moulage dans du métal au moyen de moules (40) dont la forme creuse correspond chaque fois à une coque (14), l'élément d'équilibrage de température en méandres étant bloqué par serrage dans le moule (40) entre des formations (40a', 40b') des demi-moules (40a, 40b), lesquelles pénètrent dans la cavité de morne (41) et atteignent l'élément d'équilibrage de température dans la région de faces d'appui (13e) diamétralement opposées, et on injecte ensuite le métal liquide dans la cavité de moule (41) à une pression d'injection comprise entre 5.10⁷ et 13.10⁷ Pa (500 et 1300 bars) et en une durée d'au plus six secondes.
